# EUROPÄISCHE PATENTSCHRIFT

(11) **EP 2 182 229 B1**
(45) Veröffentlichungstag und Bekanntmachung des Hinweises auf die Patenterteilung: **06.06.2012**
(21) Anmeldenummer: 09174115.7
(22) Anmeldetag: 27.10.2009
(51) Int. Cl.: F16C 29/06, F16C 29/08

(54) **Linearwälzlager**
Linear rolling bearing
Palier à roulement linéaire

(30) Priorität: 30.10.2008 DE 102008053932
(43) Veröffentlichungstag der Anmeldung: 05.05.2010
(73) Patentinhaber: Schaeffler Technologies AG & Co. KG, 91074 Herzogenaurach (DE)
(72) Erfinder: Elicker, Thomas, 66564, Ottweiler (DE); Gross, Kerstin, 66822, Lebach (DE); Menges, Martin, 66424, Homburg (DE)

(56) Entgegenhaltungen:
- EP-A1- 0 318 980
- DE-A1- 19 915 042
- DE-A1-102006 040 981
- US-A- 4 582 369
- US-B1- 6 250 805

## Beschreibung

Die vorliegende Erfindung betrifft ein Linearwälzlager, mit einem auf einer Führungsschiene längsverschieblich über Wälzkörper gelagerten Führungswagen.

Aus DE 43 11 515 A1 beispielsweise ist ein Linearwälzlager nach den Merkmalen des Oberbegriffs des Anspruchs 1 bekannt geworden. Der Führungswagen ist mit Aufnahmenuten zur Aufnahme der Längsdichtungen versehen, wobei die Längsdichtungen an einen Schmierstoffverteiler angeschlossen sind, der auch als Endplatte 332 bezeichnet ist. Längsdichtungen an sich sind grundsätzlich aus einem weichen Werkstoff gebildet, der geeignet ist, dichtend an einem anderen Körper anzuliegen, beispielsweise mit einer Dichtlippe. Der Schmierstoffverteiler - oder auch Endplatte - hingegen ist oftmals aus einem härteren Werkstoff hergestellt, so dass seine Formstabilität gewährleistet ist. Eine einstückige Verbindung zwischen dem Schmierstoffverteiler und der Längsdichtung ist zwar möglich, jedoch bereiten die unterschiedlichen Anforderungen an die Werkstoffeigenschaften gegebenenfalls Schwierigkeiten. Es ist jedoch denkbar, eine einstückige Verbindung in einem so genannten Zweikomponentenspritzverfahren vorzusehen.

Zur einwandfreien Anordnung der Längsdichtungen an dem Führungswagen ist der Führungswagen mit Aufnahmenuten für diese Längsdichtungen versehen. Der Führungswagen umfasst einen Tragkörper, oder auch Lagerhauptkörper, der an seinen beiden Stirnseiten so genannte Kopfstücke aufweist, die im genannten Stand der Technik auch den Schmierstoffverteiler - oder die Endkappen - aufweisen. Zur einwandfreien Halterung der Längsdichtungen an dem Lagerhauptkörper muss dieser in aufwendiger Weise mit den Nuten versehen werden, die im Regelfall spangebend hergestellt werden.

Aus DE 199 15042 A1 ist ein Linearwälzlager nach den Merkmalen des Oberbegriffs des Anspruchs 1 bekannt geworden. Die Längsdichtungen sind in Längsdichtungsträgern aufgenommen, die an dem Führungswagen gehalten sind.

Aufgabe der vorliegenden Erfindung war es, ein Linearwälzlager nach den Merkmalen des Oberbegriffs des Anspruchs 1 anzugeben, der einfach herstellbar ist, und bei dem die Bearbeitung des Tragkörpers reduziert ist.

Erfindungsgemäß wird diese Aufgabe durch das Linearwälzlager gemäß Anspruch 1 gelöst.

Dadurch, dass beide Kopfstücke mit je einem Dichtungsträger versehen sind, der mit mindestens einer, vorzugsweise zwei zu jeder der beiden Längsseiten der Führungsschiene angeordneten Halteleisten versehen ist, die sich entlang der Führungsschiene zwischen dem Führungswagen und der Führungsschiene erstrecken, wobei die Halteleisten die Längsdichtungen tragen, ist einerseits eine separate Ausbildung von Nuten an dem Tragkörper des Führungswagens entbehrlich, da die Halteleisten die Längsdichtungen tragen. Der Dichtungsträger mit den Halteleisten kann beispielsweise als einstückiges Bauteil aus Kunststoff im Spritzverfahren hergestellt werden. Dieser Dichtungsträger kann dann problemlos an den Tragkörper des Führungswagens angesetzt werden.

Bei dem erfindungsgemäßen Linearwälzlager kann die Auswahl des Werkstoffes für den Schmierstoffverteiler unabhängig von der Auswahl des Werkstoffes für die Längsdichtungen erfolgen.

Erfindungsgemäß ist vorgesehen, dass beide Kopfstücke je einen mit Schmiermittelkanälen versehenen Schmierstoffverteiler aufweisen, wobei die Schmiermittelkanäle an die Umlaufkanäle angeschlossen sind, und wobei der Dichtungsträger durch den Schmierstoffverteiler gebildet ist. Die Erfindung nutzt demzufolge den an sich bekannten Schmierstoffverteiler als Dichtungsträger für die Längsdichtungen, wobei die Halteleisten an dem Schmierstoffverteiler angebracht sind.

Dadurch, dass jeder der beiden Schmierstoffverteiler mit jeweils mindestens einer, vorzugsweise zwei, zu jeder der beiden Längsseiten der Führungsschiene angeordneten Halteleisten versehen ist, die sich entlang der Führungsschiene zwischen dem Führungswagen und der Führungsschiene erstrecken, wobei die Halteleisten die Längsdichtungen tragen, ist einerseits die Bearbeitung des Tragkörpers reduziert: da der an dem Tragkörper stirnseitig angeordnete Schmierstoffverteiler mit den erfindungsgemäßen Halteleisten versehen ist, entfallen die separaten Nuten oder anderen Aufnahmen an dem Tragkörper zur Aufnahme der Längsdichtungen . Die Längsdichtungen sind einwandfrei an den Halteleisten gehaltert und positioniert.

Andererseits kann der oftmals im Spritzverfahren hergestellte Schmierstoffverteiler auf einfache Art und Weise mit den Halteleisten einstückig verbunden sein, wobei ein gemeinsamer Werkstoff für die Halteleisten und den Schmierstoffverteiler eingesetzt werden kann.

Die Erfindung erreicht gegenüber dem bekannten Stand der Technik also eine vereinfachte Herstellung des Tragkörpers, und ermöglicht gleichzeitig die Auswahl eines idealen Werkstoffs für die Längsdichtungen, ohne dass Kompromisse im Hinblick auf die Auswahl des Werkstoffes für den Schmierstoffverteiler eingegangen werden müssen.

Bei erfindungsgemäßen Linearwälzlagern kann das Kopfstück aufweisen: den Umlenkabschnitt, einen Abstreifer, den Schmierstoffverteiler oder Dichtungsträger mit den Halteleisten, sowie Befestigungsmittel, um das Kopfstück an dem Tragkörper lösbar oder unlösbar zu befestigen.

Der Umlenkabschnitt ist dabei begrenzt durch eine Innenumlenkung sowie eine Außenumlenkung. Die Innenumlenkung kann an einem inneren Umlenkstück ausgebildet sein, dass an die Stirnseite des Tragkörpers anschließt. Die Außenumlenkung kann durch eine Umlenkschale gebildet sein, die Außenumlenkung kann aber auch direkt an den Schmierstoffverteiler angeformt sein, wobei dieser Schmierstoffverteiler plattenförmig ausgebildet sein kann. Die Innenumlenkung ist mit der inneren Umlenkbahn und die Außenumlenkung ist mit der äußeren Umlenkbahn versehen, wobei die Wälzkörper an diesen beiden Umlenkbahnen umgelenkt werden. Sofern eine Umlenkschale vorgesehen ist, kann diese Umlenkschale auch ohne das Kopfstück direkt an dem Tragkörper gehaltert sein. Beispielsweise kann diese Umlenkschale aufgeclipst sein. In diesem Fall kann das Kopfstück mit dem Schmierstoffverteiler entfernt werden, ohne dass die Wälzkörper aus der Umlenkung herausfallen können.

Der Abstreifer kann in bekannter Weise u-förmig ausgebildet sein, und mit seiner Abstreiferfläche in Abstreifkontakt mit der Führungsschiene stehen. Der Abstreifer selbst kann dabei an dem Kopfstück gehaltert sein. Die Abstreiferfläche kann auch als Dichtlippe ausgeführt sein.

Bei einer erfindungsgemäßen Weiterbildung sind Paare von in Längsrichtung der Führungsschiene hintereinander angeordneten Halteleisten vorgesehen, wobei sich jedes Paar über die Länge eines der Lastabschnitte des Umlaufkanals erstreckt. An ihren einander zugewandten Enden können die beiden Halteleisten eines Paares eine Übergangsstelle bilden. Auch an dieser Übergangsstelle ist ein einwandfreier Dichtkontakt der Halteleisten mit der Führungsschiene gewährleistet.

Bei einer erfindungsgemäßen Weiterbildung ist ein Längsdichtungskäfig gebildet, dessen Längsdichtungen an einem Ende jeweils an einen etwa u-förmigen Bügel einstückig anschließen, wobei der Bügel die Führungsschiene umgreift. Vorzugsweise sind diese Längsdichtungen einstückig mit dem Bügel verbunden. Der erfindungsgemäße Längsdichtungskäfig kann als Einzelteil ausgetauscht werden.

Vorzugsweise sind zwei Längsdichtungskäfige vorgesehen, deren einstückig angeformte Längsdichtungen mit ihren freien Enden einander zugewandt sind, wobei der eine Bügel dem einen Kopfstück und der andere Bügel dem anderen Kopfstück zugeordnet ist. Die Übergangsstellen der Halteleisten und der Längsdichtungen sind vorzugsweise etwa mittig zwischen Anfang und ende des Lastabschnitts des Umlaufkanals angeordnet.

Zwei in Längsrichtung der Führungsschiene hintereinander angeordnete Längsdichtungen können ein Paar bilden, das sich über die Länge eines der Lastabschnitte des Umlaufkanals erstreckt, wobei die eine Längsdichtung des Paares dem einen Längsdichtungskäfig und die andere Längsdichtung des Paares dem anderen Längsdichtungskäfig zugeordnet ist. Bei diesem erfindungsgemäßen Linearwälzlager können die beiden Längsdichtungskäfige an den Führungswagen montiert werden, wobei der eine Längsdichtungskäfig von der einen Stirnseite her und der andere Längsdichtungskäfig von der anderen Stirnseite des Führungswagen her eingeführt werden kann.

Jeweils einem Paar der genannten Halteleisten kann ein Paar der genannten Längsdichtungen zugeordnet sein, wobei die zwischen den freien Enden der beiden Halteleisten gebildete Übergangsstelle in Längsrichtung der Führungsschiene versetzt zu der zwischen den freien Enden der beiden Längsdichtungen gebildete Übergangsstelle angeordnet sein kann. Der Versatz in Längsrichtung der Führungsschiene ermöglicht je nach Ausführung der Enden der Halteleisten und der Längsdichtungen eine verbesserte Abdichtung des Lastabschnittes zu Umgebung hin.

Bei einer weiteren erfindungsgemäßen Weiterbildung ist der Längsdichtungskäfig auf den Schmierstoffverteiler aufgesteckt. Bei dieser erfindungsgemäßen Weiterbildung kann es möglich sein, den Längsdichtungskäfig - sofern erforderlich - aus dem Führungswagen herauszuziehen, ohne die Kopfstücke mit den Schmierstoffverteilern zu demontieren.

Weiter oben wurde bereits erwähnt, dass mehrere Längsdichtungen über einen Bügel miteinander verbunden sind, so dass ein Längsdichtungskäfig gebildet ist. Dieser Bügel kann als Kopfdichtung ausgebildet sein und in Dichtkontakt mit der Führungsschiene stehen. Gegebenenfalls kann somit eine weitere separate Kopfdichtung entfallen, es ist jedoch auch möglich, einen zusätzlichen Abstreifer vorzusehen, der ebenfalls an das Kopfstück angeschlossen ist.

Bei einer weiteren erfindungsgemäßen Weiterbildung sind zu beiden Längsseiten der Führungsschiene jeweils zwei Umlaufkanäle angeordnet, deren Umlaufebenen winklig zueinander angeordnet sind, wobei die beiden Lastabschnitte zwischen zwei Längsdichtungen angeordnet sind, die die beiden Lastabschnitte an ihren Längsseiten abdichten. Anders als bei dem eingangs erwähnten bekannten Linearwälzlager ist bei dieser erfindungsgemäßen Weiterbildung keine Längsdichtung zwischen den zwei einander benachbarten Lastabschnitten einer Seite der Führungsschiene vorgesehen. Vielmehr genügt es, diese beiden Lastabschnitte zwischen den beiden außen liegenden Längsdichtungen schmiermitteldicht einzuschließen.

Bei diesem erfindungsgemäßen Linearwälzlager sind demzufolge vier endlose Umlaufkanäle vorgesehen, wobei die Wälzkörper zwischen Laufbahnen der Führungsschiene und des Führungswagens angeordnet sind. Bei dieser erfindungsgemäßen Weiterbildung sind die Wälzkörper in so genannter x - Anordnung.

Für eine einfache Montage der Längsdichtungen kann die Halteleiste mit einer Längsaufnahme zur Halterung der Längsdichtungen versehen sein. Vorzugsweise ist die Halteleiste mit einem Längsschlitz zur Durchführung einer Dichtlippe der Längsdichtung versehen. In diesem Fall kann die Halteleiste sowohl die Längsaufnahme als auch den Längsschlitz aufweisen.

Der Schmierstoffverteiler kann Anschlüsse zur Schmierstoffversorgung sowie genügend Schmierstoffkanäle zum Verteilen des Schmierstoffs an die einzelnen Umlaufkanäle aufweisen. Die erfindungsgemäßen Halteleisten können an den vorzugsweise plattenförmig ausgebildeten Schmierstoffverteiler einstückig angeformt sein, oder aber auch als separate Elemente an den Schmierstoffverteiler montiert werden.

Bei einer weiteren erfindungsgemäßen Weiterbildung kann es genügen, wenn zu beiden Längsseiten der Führungsschiene jeweils nur eine Halteleiste - oder ein Paar von hintereinander angeordneten Halteleisten - und eine Längsdichtung - oder ein Paar von hintereinander angeordnete Längsdichtungen - vorgesehen sind, und zwar an den beiden Enden der beiden Schenkel des Führungswagens. Diese Weiterbildung geht von der Überlegung aus, dass auch bei erfindungsgemäßen Linearwälzlagern mit insgesamt vier endlosen Umlaufkanälen es genügen kann, wenn die beiden äußeren Umlaufkanäle an ihren Lastabschnitten abgedichtet sind.

Zur weiteren Erhöhung der Dichtwirkung kann zusätzlich die erfindungsgemäße Halteleiste als Spaltdichtung ausgebildet sein, wobei zwischen der Halteleiste und der Führungsschiene die Spaltdichtung gebildet ist.

Der Längsdichtungskäfig kann mittels besonderer Befestigungsmittel mit dem Schmierstoffverteiler verbunden sein.

Der Schmierstoffverteiler sowie der Längsdichtungskäfig können auch Elemente zur Fixierung und/oder Zentrierung weiterer Zubehörteile wie zum Beispiel Dichtungen oder Vorsatzelemente aufweisen.

Die freien Enden der Halteleisten können mit Zentrierungselementen oder Fixierungselementen ausgestattet sein. Wenn beispielsweise die beiden stirnseitig am Führungswagen angeordneten Schmierstoffverteiler mit den daran angeordneten Halteleisten an den Führungswagen montiert werden, können die einander zugewandten freien Enden der Halteleisten der beiden Schmierstoffverteiler mittels dieser Fixierungs- oder Zentrierungselemente einwandfrei zueinander positioniert werden. Denkbar ist beispielsweise, dass die einen freien Enden mit einer kegelförmigen Spitze und die anderen freien Ende mit einer kegelförmigen Ausnehmung versehen sind, wobei die freien Enden mit ihren kegelförmigen Spitzen in diese kegelförmigen Ausnehmungen eingreifen, so dass die beiden hintereinander angeordneten Halteleisten der beiden Schmierstoffverteiler einwandfrei zueinander zentriert angeordnet sind.

Der Schmierstoffverteiler kann ferner mit Elementen zur Längenkompensation des Tragkörpers ausgestattet sein.

Nachstehend wird die Erfindung anhand von drei in insgesamt zehn Figuren abgebildeten Ausführungsbeispielen näher erläutert. Es zeigen:
- Figur 1: ein erfindungsgemäßes Linearwälzlager in perspektivischer Dar- stellung, teilweise demontiert,
- Figur 1a: einen Teillängsschnitt durch das erfindungsgemäße Linearwälz- lager aus Figur 1,
- Figur 2: einen Querschnitt durch das erfindungsgemäße Linearwälzlager,
- Figur 3: einen Schmierstoffverteiler des Kopfstückes des erfindungsge- mäßen Linearwälzlagers in perspektivischer Darstellung,
- Figur 4: den Schmierstoffverteiler aus Figur 3, jedoch mit abgenommenen Deckplatte
- Figur 5: den Schmierstoffverteiler aus Figur 3 aus einer anderen Perspek- tive,
- Figur 6: einen Längsdichtungskäfig des erfindungsgemäßen Linearwälz- lagers in perspektivischer Darstellung,
- Figur 7: den Längsdichtungskäfig aus Figur 6 in einer weiteren perspekti- vischen Darstellung,
- Figur 8: einen weiteren erfindungsgemäßen Schmierstoffverteiler in per- spektivischer Darstellung,
- Figur 9: einen weiteren erfindungsgemäßen Schmierstoffverteiler in per- spektivischer Darstellung und
- Figur 10: einen mit dem Schmierstoffverteiler gemäß Figur 9 zusammen- wirkenden weiteren erfindungsgemäßen Schmierstoffverteiler.

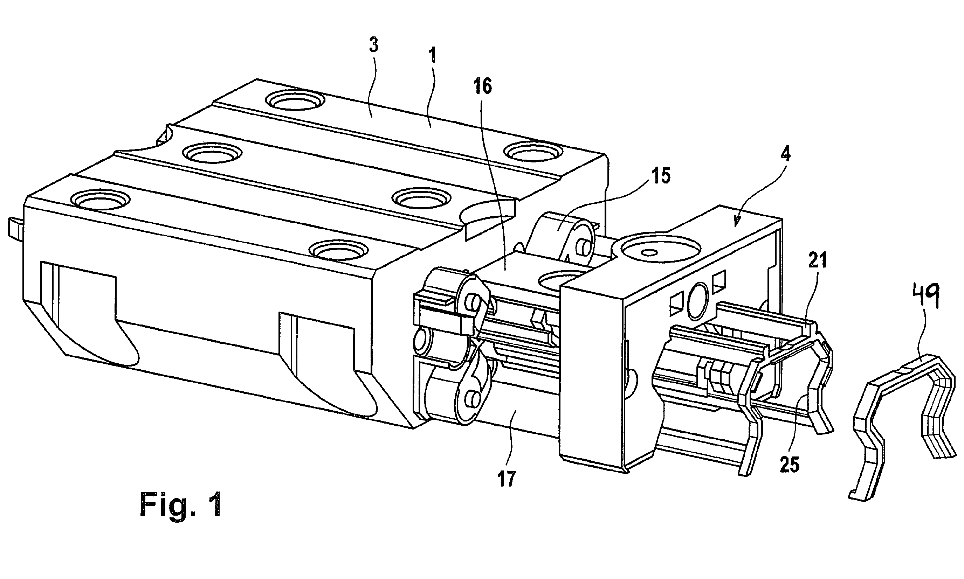

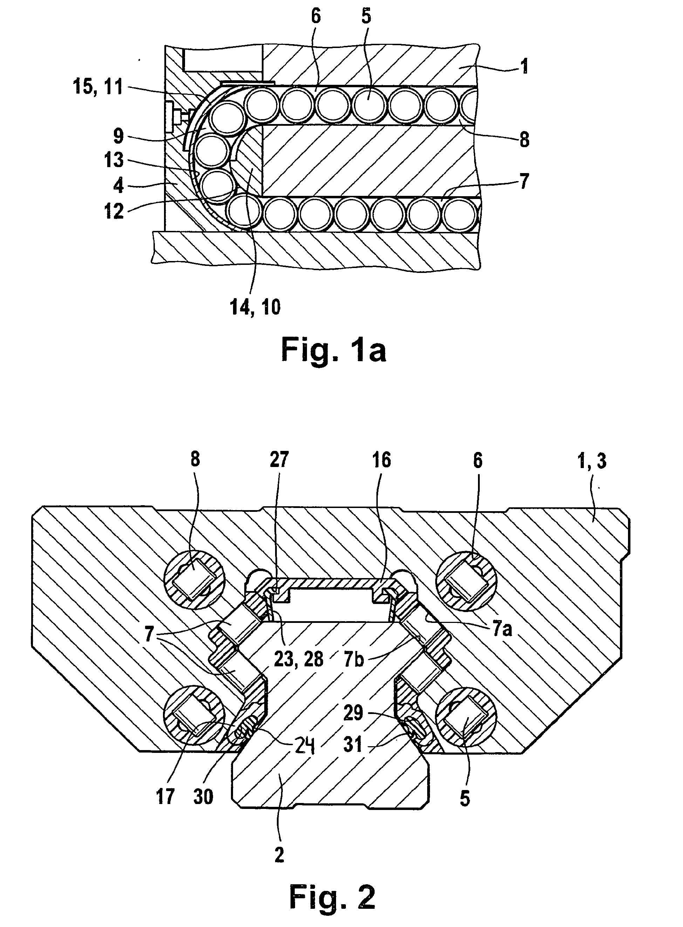

Die Figuren 1, 1 a und 2 zeigen ein erfindungsgemäßes Linearwälzlager, wobei Figur 1 eine perspektivische Darstellung und Figur 2 einen Querschnitt durch das Linearwälzlager zeigt. Ein Führungswagen 1 ist auf einer Führungsschiene 2 längsverschieblich gelagert.

Der Führungswagen 1 weist einen Tragkörper 3 und zu beiden Stirnseiten des Tragkörpers 3 angeordnete Kopfstücke 4 auf, von denen in der Figur 1 lediglich eines abgebildet ist.

Der Führungswagen 1 ist über Rollen 5 auf der Führungsschiene 2 wälzgelagert. In dem Teillängsschnitt gemäß Figur 1 a ist zu erkennen, dass die Rollen 5 in endlosen Umlaufkanälen 6 endlos umlaufenden. Es sind insgesamt 4 endlose Umlaufkanäle 6 vorgesehen (Figur 2). Zu beiden Längsseiten der Führungsschiene 2 sind jeweils 2 endlose Umlaufkanäle 6 angeordnet, wobei die Umlaufebenen der an einer Längsseite der Führungsschiene angeordneten beiden Umlaufkanäle 6 rechtwinklig zueinander angeordnet sind. Die vier Umlaufkanäle 6 sind mit ihren lastübertragenden Rollen 5 vorliegend in x - Anordnung ausgerichtet.

Jeder endlose Umlaufkanal 6 ist gebildet aus einem Lastabschnitt 7, einem Rücklaufabschnitt 8, sowie den Lastabschnitt 7 mit dem Rücklaufabschnitt 8 endlos verbindenden Umlenkabschnitten 9 (Figur 1 a). Die Rollen 5 werden über die Umlenkabschnitte 9 und die Rücklaufabschnitte 8 von einem Ende des Lastabschnittes 7 zu einem Anfang des Lastabschnittes 7 geführt.

Das Kopfstück 4 umfasst die Umlenkabschnitte 9, die vorliegend im Kopfstück 4 untergebracht sind. Der Umlenkabschnitt 9 ist gebildet durch eine Innenumlenkung 10 sowie einer Außenumlenkung 11, wobei die Innenumlenkung 10 mit einer Inneren Umlenkbahn 12 und die Außenumlenkung 11 mit einer äußeren Umlenkbahn 13 versehen ist. Die Innenumlenkung 10 ist als Umlenkstück 14 an dem Tragkörper 3 gehaltert. Die Außenumlenkung 11 ist als Umlenkschale 15 ausgebildet, die ebenfalls an dem Tragkörper 3 gehaltert ist, wobei vorliegend die Umlenkschale 15 aufgeclipst ist. Die Umlenkschale 15 ist in Figur 1 und in Figur 1 a im Längsschnitt abgebildet.

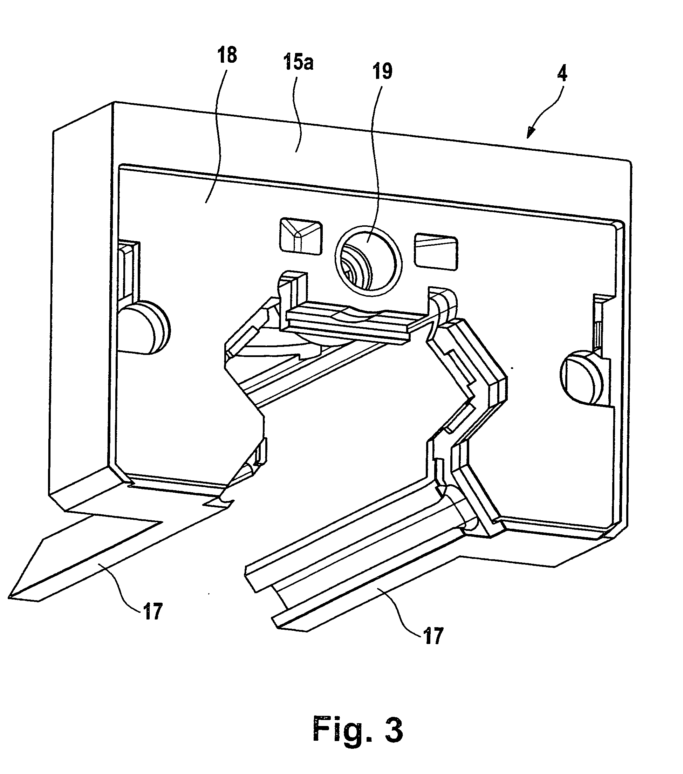

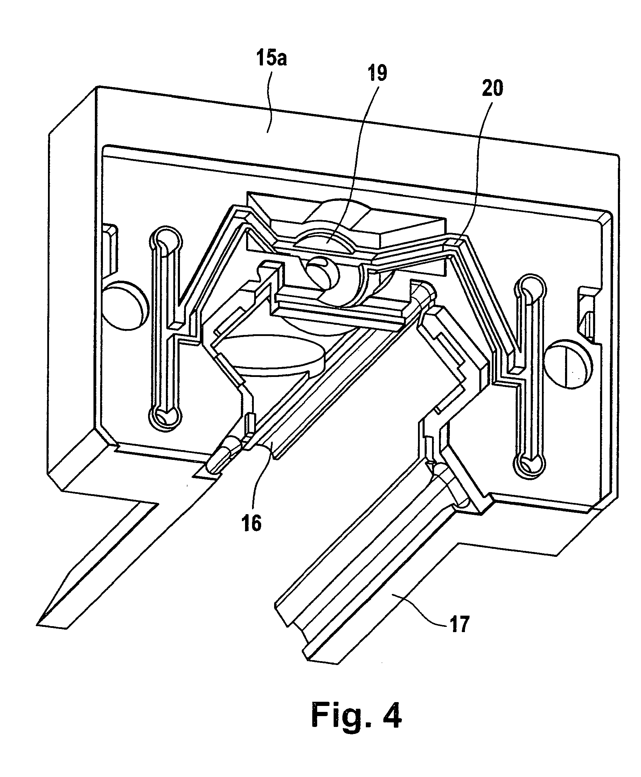

Das Kopfstück 4 ist mit einem hier etwa plattenförmigen Schmierstoffverteiler 15 a versehen. Dieser Schmierstoffverteiler 15 a ist mit oberen und unteren Halteleisten 16,17 versehen, wie insbesondere den Figuren 3,4 und 5 zu entnehmen ist. Die Figuren 3 und 4 zeigen deutlich die einstückig angeformten unteren und oberen Halteleisten 17, 16. Bei der Darstellung in Figur 3 ist der Schmierstoffverteiler 15 a mit einer Deckplatte 18 abgebildet, während bei der Abbildung gemäß Figur 4 die Deckplatte weggelassen ist.

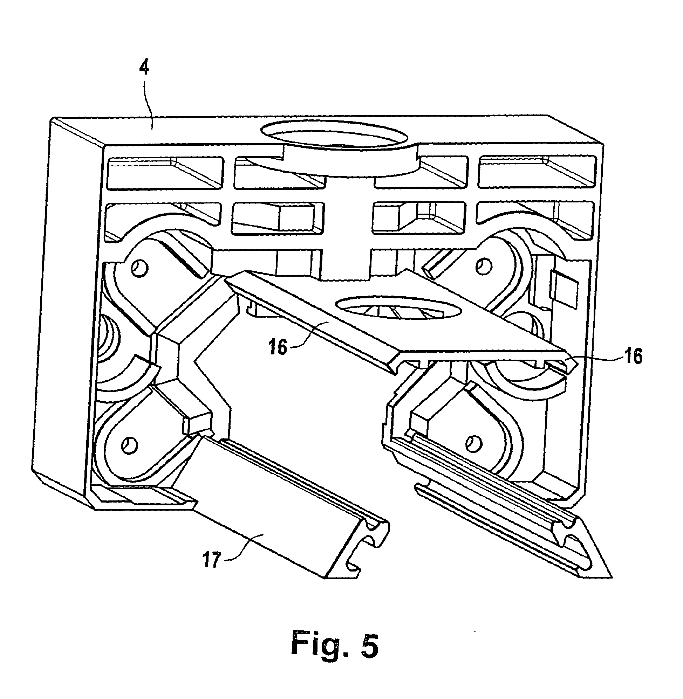

Figur 5 zeigt in einer weiteren perspektivischen Abbildung den Schmierstoffverteiler 15 a, wobei hier deutlich sowohl die unteren Halteleisten 17 als auch die oberen Halteleisten 19 zu erkennen sind, und wobei die beiden oberen Halteleisten 19 einstückig miteinander verbunden sind, so dass eine gewünschte Steifigkeit erreicht werden kann.

Der Schmierstoffverteiler 15 a ist mit einem Schmiermittelanschluss 19 versehen, der mit Schmiermittelkanälen 20 hydraulisch verbunden ist. Diese Schmiermittelkanäle 20 sind an sämtliche 4 Umlaufkanäle 6 angeschlossen, wobei vorliegend diese Schmiermittelkanäle 20 in die Umlenkabschnitte 9 der Umlaufkanäle 6 münden.

Der Schmierstoffverteiler 15 a mit den einstückig daran ausgebildeten Halteleisten 16,17 ist aus Kunststoff im Spritzverfahren hergestellt, wobei vorliegend die Schmiermittelkanäle 20 als offene Kanäle ausgeführt sind, wobei diese offenen Schmiermittelkanäle 20 von dem Tragkörper 3 abgewandt sind. Die offenen Schmiermittelkanäle 20 sind mittels der bereits erwähnten Deckplatte 18 schmiermitteldicht abgedeckt. Bei dieser Anordnung der Schmiermittelkanäle 20 muss bei der Montage der Kopfstücke und des Schmierstoffverteilers 15a nicht auf die Abdichtung der Schmiermittelkanäle 20 geachtet werden, da diese bereits zuvor - also vor der Montage an den Führungswagen - mittels der bereits erwähnten Deckplatte 18 einwandfrei abgedichtet sind.

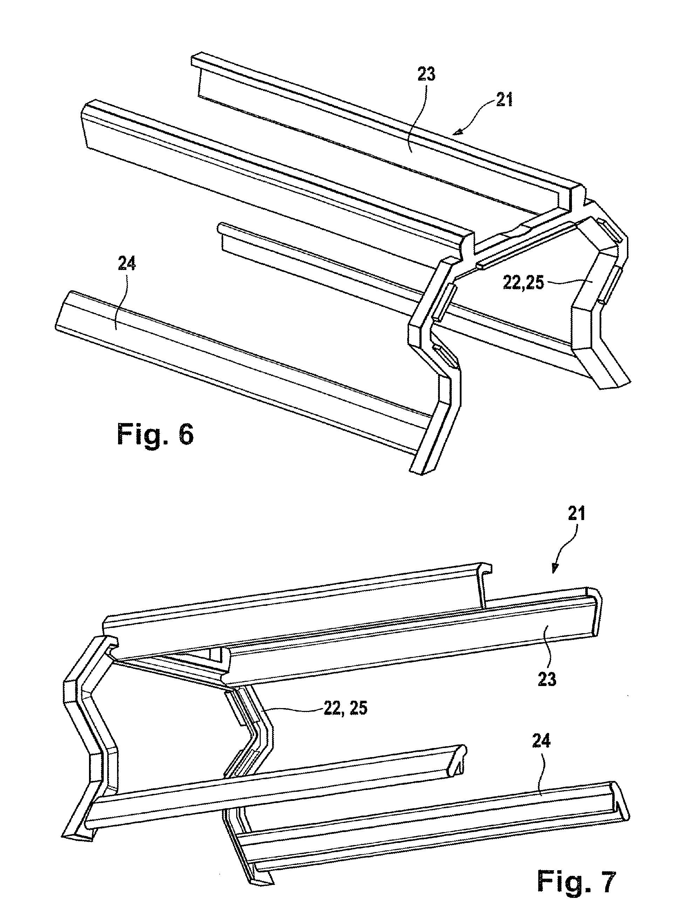

Die Figuren 6 und 7 zeigen in perspektivischen Abbildungen einen Längsdichtungskäfig 21, wobei für den hier beschriebenen erfindungsgemäßen Führungswagen zwei Längsdichtungskäfige 21 vorgesehen sind.

Der Längsdichtungskäfig 21 weist einen etwa u-förmig geformten, die Führungsschiene umgreifenden Bügel 22 auf, und zwei obere sowie zwei untere Längsdichtungen 23,24. Die Längsdichtungen 23,24 sind parallel zur Führungsschiene 2 angeordnet und mit ihren einen Enden einstückig mit dem Bügel 22 verbunden. Als Werkstoff zur Herstellung dieses Längsdichtungskäfig kann jeder gängige Dichtungswerkstoff verwendet werden. In günstiger Weise ist der erfindungsgemäße Längsdichtungskäfig 21 aus Kunststoff im Spritzverfahren hergestellt.

Der Bügel 22 ist vorliegend als Frontabstreifer 25 ausgebildet, der in dem Kopfstück 4 untergebracht ist und dichtend an der Führungsschiene 2 anliegt.

Insbesondere der Figur 1 kann entnommen werden, dass der Längsdichtungskäfig 21 in das Kopfstück 4 mit dem Schmierstoffverteiler 15 a in Längsrichtung der Führungsschiene aufgeschoben werden kann, wobei die Längsdichtungen 23,24 in den Halteleisten 16,17 des Schmierstoffverteilers 15 a gehaltert sind.

Bei der vorliegenden Erfindung dient der Schmierstoffverteiler 15 a demzufolge als Dichtungsträger, an den die Halteleisten 16,17 zur Aufnahme der Längsdichtungen 23,24 einstückig angeformt sind. Bei einer erfindungsgemäßen Variante kann es von Vorteil sein, den Dichtungsträger und den Schmierstoffverteiler als separate Bauteile auszubilden, die beiden Teile des Kopfstückes sein können.

Insbesondere die Figur 2 zeigt, dass die oberen Halteleisten 16 mit Längsaufnahme versehen sind, in denen die oberen Längsdichtungen 22 aufgenommen sind, wobei diese oberen Halteleisten 16 mit Längsschlitzen 27 versehen sind, so dass Dichtlippen 28 der oberen Längsdichtung 23 durch diese Längsschlitze 27 durchgreifen und dichtend an der Führungsschiene 2 anliegen.

Auch die unteren Halteleisten 17 sind jeweils mit einer Längsaufnahme 29 sowie einem Längsschlitz 30 versehen, so dass Dichtlippen 31 der beiden unteren Längsdichtungen 24 durch diese Längsschlitze 30 durchgreifen und in dichtendem Kontakt mit der Führungsschiene 2 stehen.

Der Figur 2 ist ferner zu entnehmen, dass auf beiden Seiten der Führungsschiene 2 die beiden Lastabschnitte 7 unmittelbar nebeneinander angeordnet sind, und wobei diese beiden Lastabschnitte 7 durch lediglich zwei außen liegende Längsdichtungen 23, 24 abgedichtet sind.

Mit dem erfindungsgemäßen Linearwälzlager kann bei Verschleiß der Längsdichtungen 23, 24 auf einfache Art und Weise ein Austausch gegen neue Längsdichtungen 23, 24 erfolgen: entweder kann das Kopfstück 4 mit dem Schmierstoffverteiler 15a abgezogen werden - wobei in diesem Fall die Umlenkschalen 15 an dem Tragkörper 3 gehaltert bleiben - und gegen ein neues Kopfstück 4 mit neuem Schmierstoffverteiler 15a und neuen Längsdichtungskäfigen 21 ausgetauscht werden, oder aber der Schmierstoffverteiler 15a bleibt an dem Tragkörper 3 montiert und lediglich der Längsdichtungskäfig 21 wird herausgezogen und gegen einen neuen Längsdichtungskäfig ausgetauscht.

Der Figur 1 kann noch entnommen werden, dass das Kopfstück 4 mit einem zusätzlichen Frontabstreifer 49 versehen ist, so dass der Führungswagen 1 stirnseitig mittels der Frontabstreifer 32 und 25 abgedichtet ist.

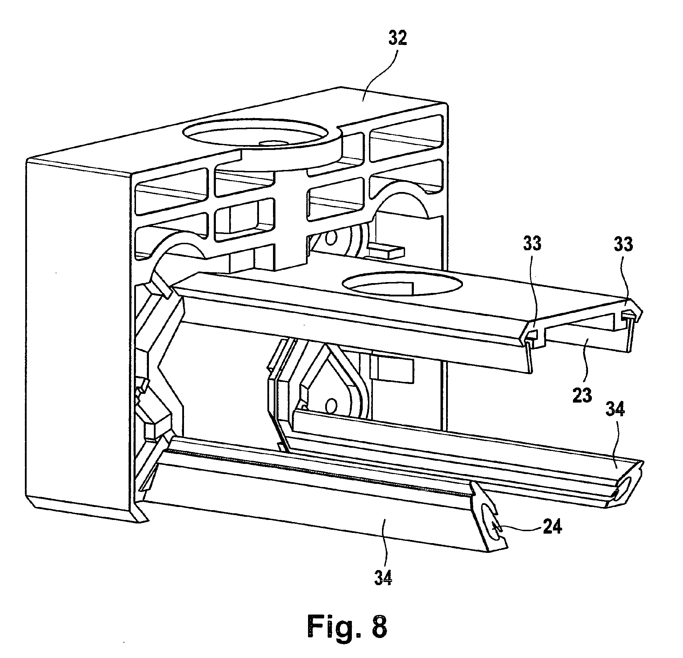

Figur 8 zeigt in perspektivischer Darstellung einen modifizierten Schmierstoffverteiler 32, mit einstückig daran angeformten oberen Halteleisten 33 und unteren Halteleisten 34, die die Längsdichtungen 23, 24 aufnehmen. Dieser Schmierstoffverteiler 32 unterscheidet sich von dem Schmierstoffverteiler 15a lediglich durch eine geänderte Ausbildung der freien Enden der Halteleisten 33, 34, sowie der Längsdichtungen 23, 24. Der Figur 8 ist zu entnehmen, dass diese freien Enden sämtlich abgeschrägt sind, was insbesondere deutlich bei den unteren Halteleisten 34 zu erkennen ist. Die Abschrägungen an den beiden unteren Halteleisten sind gegenläufig ausgebildet, so dass zwei baugleiche Schmierstoffverteiler so zusammengefügt werden können, dass die Abschrägungen von zwei hintereinander angeordneten Halteleisten einwandfrei aneinander anliegen.

Wenn diese beiden Schmierstoffverteiler 32 an den Führungswagen 1 montiert sind, erstrecken sich die hintereinander angeordneten Halteleisten der beiden Schmierstoffverteiler über die gesamte Länge des Lastabschnitts 7 des Führungswagens 1.

Die Längsdichtungen 23,24 sind ebenso angeschrägt wie die Halteleisten 33,34.

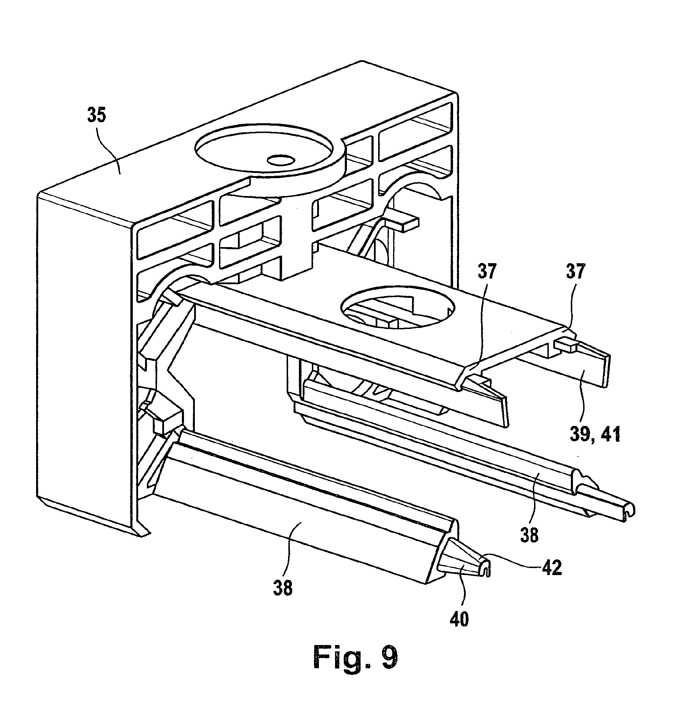

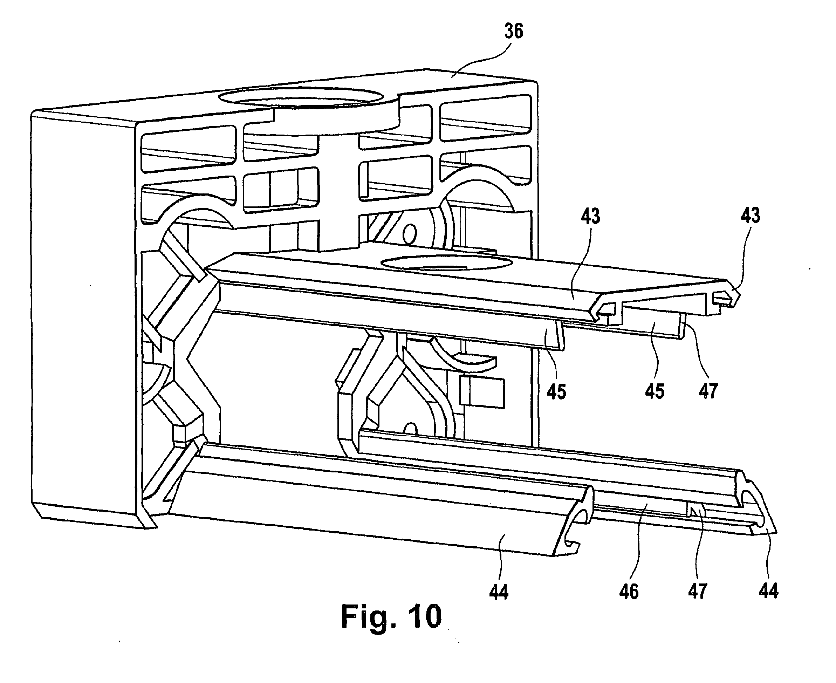

Die Figuren 9 und 10 zeigen zwei weitere modifizierte Schmierstoffverteiler 35, 36, die ebenfalls gemeinsam an den Führungswagen 1 montiert werden können. Im Gegensatz zu dem Schmierstoffverteiler gemäß Figur 8 sind diese Schmierstoffverteiler 35,36 nicht baugleich, was nachstehend näher erläutert wird.

Der Schmierstoffverteiler 35 ist mit einstückig angeformten oberen Halteleisten 37 und unteren Halteleisten 38 versehen. Ebenso wie bei den vorangegangenen Ausführungsbeispielen tragen diese Halteleisten 37,38 Längsdichtungen 39,40. Der Figur 9 ist zu entnehmen, dass die Längsdichtungen 39,40 die Halteleisten 37, 38 in Längsrichtung der Führungsschiene überragen. Außerdem sind diese Längsdichtungen 39,40 an ihren freien Enden abgeschrägt, so dass Einführschrägen 41,42 gebildet sind.

Bei dem Schmierstoffverteiler 36 aus Figur 10 sind ebenfalls obere und untere Halteleisten 43,44 einstückig angeformt, die Längsdichtungen 45,46 aufnehmen. Der Abbildung ist zu entnehmen, dass hier die Halteleisten 43,44 in Längsrichtung der Führungsschiene gesehen die Längsdichtungen 45,46 überragen, wobei die Längsdichtungen 39,40 des anderen Schmierstoffverteiler 35 in die Halteleisten 43,44 des Schmierstoffverteiler 36 eingreifen. Die Einführschrägen 41,42 an den Längsdichtungen 39,40 erleichtern dabei das Einführen in die Halteleisten 43,44.

Die zusammenwirkenden Schmierstoffverteiler 35, 36 weisen demzufolge Übergangsstellen 47 zwischen den Halteleisten 43,44 des Schmierstoffverteiler 36 sowie den Halteleisten 37,38 des Schmierstoffverteilers 35 auf. Zwischen den Längsdichtungen 45,46 des Schmierstoffverteilers 36 einerseits sowie den Längsdichtungen 39,40 des Schmierstoffverteilers 35 andererseits sind weitere Übergangsstellen 48 gebildet. Die Übergangsstellen 47, 48 sind versetzt zueinander angeordnet. Das versetzte Anordnen der Übergangsstellen 45 und 46 unterstützt einerseits die Montage, weil die Längsdichtungen 39,40 gewissermaßen eingefädelt werden können in die Halteleisten 43,44 des Schmierstoffverteilers 36. Andererseits kann das versetzte Anordnen der Übergangsstellen 47, 48 die Dichtwirkung unterstützen.

### Positionszahlen

- 1: Führungswagen
- 2: Führungsschiene
- 3: Tragkörper
- 4: Kopfstück
- 5: Rolle
- 6: Umlaufkanal
- 7: Lastabschnitt
- 7a: Laufbahn
- 7b: Laufbahn
- 8: Rücklaufabschnitt
- 9: Umlenkabschnitt
- 10: Innenumlenkung
- 11: Außenumlenkung
- 12: innere Umlenkbahn
- 13: äußere Umlenkbahn
- 14: Umlenkstück
- 15: Umlenkschale
- 15a: Schmierstoffverteiler
- 16: obere Halteleisten
- 17: untere Halteleisten
- 18: Deckplatte
- 19: Schmermittelanschluss
- 20: Schmiermittelkanal
- 21: Längsdichtungskäfg
- 22: Bügel
- 23: Längsdichtung
- 24: Längsdichtung
- 25: Frontabstreifer
- 26: Längsaufnahme
- 27: Längsschlitz
- 28: Dichtlippe
- 29: Längsaufnahme
- 30: Längsschlitz
- 31: Dichtlippe
- 32: Schmierstoffverteiler
- 33: obere Halteleisten
- 34: untere Halteleisten
- 35: Schmierstoffverteiler
- 36: Schmierstoffverteiler
- 37: obere Halteleisten
- 38: untere Halteleisten
- 39: Längsdichtung
- 40: Längsdichtung
- 41: Einführschräge
- 42: Einführschräge
- 43: obere Halteleisten
- 44: untere Halteleisten
- 45: Längsdichtung
- 46: Längsdichtung
- 47: Übergangsstelle
- 48: Übergangsstelle
- 49: Zusätzlicher Frontabstreifer

## Patentansprüche

1. Linearwälzlager, mit einem auf einer Führungsschiene (2) längsverschieblich über Wälzkörper gelagerten Führungswagen (1), der mit seinen Schenkeln die Führungsschiene (2) teilweise umgreift,
- wobei die Wälzkörper in zu beiden Längsseiten der Führungsschiene (2) gelegenen endlosen Umlaufkanälen (6) endlos umlaufbar angeordnet sind, wobei der Umlaufkanal (6) einen Lastabschnitt (7), einen Rücklaufabschnitt (8) sowie den Lastabschnitt (7) mit dem Rücklaufabschnitt (8) endlos verbindende Umlenkabschnitte (9) aufweist, wobei in dem Lastabschnitt (7 die Wälzkörper an Laufbahnen (7a, 7b) des Führungswagens (1) und der Führungsschiene (2) abwälzen, und wobei die Wälzkörper von einem Ende des Lastabschnitts (2) über die Umlenkabschnitte (9) und den Rücklaufabschnitt (8) zu einem Anfang des Lastabschnitts (7) gelangen,
- wobei der Führungswagen (1) einen mit den Laufbahnen (7a) des Lastabschnitts (7) und mit den Rücklaufabschnitten (8) versehenen Tragkörper (3) sowie zu beiden Stirnseiten des Tragkörpers (3) angeordnete Kopfstücke (4) aufweist, die mit den Umlenkabschnitten (9) versehen sind,
- und wobei der Führungswagen (1) an seinen Schenkeln mit Längsdichtungen (23, 24) zwischen dem Führungswagen (1) und der Führungsschiene (2) versehen ist, die die Lastabschnitte (7) der Umlaufkanäle (6) abdichten,
- und wobei der Führungswagen (1) an seinen beiden stirnseitigen Enden mit Kopfdichtungen oder Frontabstreifern (25) versehen ist, die den Führungswagen (1) stirnseitig abdichten, wobei beide Kopfstücke (4) mit je einem Dichtungsträger versehen sind, der mit mindestens einer, vorzugsweise zwei, zu jeder der beiden Längsseiten der Führungsschiene (2) angeordneten Halteleisten (16, 17, 33, 34, 43, 44) versehen ist, die sich entlang der Führungsschiene (2) zwischen dem Führungswagen (1) und der Führungsschiene (2) erstrecken, wobei die Halteleisten (16, 17, 33, 34, 43, 44) die Längsdichtungen (23, 24, 39, 40, 45, 46) tragen, **dadurch gekennzeichnet, dass** beide Kopfstücke (4) je einen mit Schmiermittelkanälen (20) versehenen Schmierstoffverteiler (15a, 32, 35, 36) aufweisen, wobei die Schmiermittelkanäle (20) an die Umlaufkanäle (6) angeschlossen sind, und wobei der Dichtungsträger durch den Schmierstoffverteiler (15a, 32, 35, 36) gebildet ist.

2. Linearwälzlager nach Anspruch 1, bei dem Paare von in Längsrichtung der Führungsschiene (2) hintereinander angeordneten Halteleisten (16, 17, 33, 34, 43, 44) sich jeweils über die Länge eines der Lastabschnitte (7) des Umlaufkanals (6) erstrecken.

3. Linearwälzlager nach Anspruch 1, bei dem ein Längsdichtungskäfig (21) gebildet ist, dessen Längsdichtungen (21) an einen etwa u-förmigen Bügel (22) einstückig anschließen, wobei der Bügel (22) die Führungsschiene (2) umgreift.

4. Linearwälzlager nach Anspruch 3, bei dem zwei mit ihren freien Enden einander zugewandte Längsdichtungskäfige (21) vorgesehen sind, deren Bügel (22) je an einem der beiden Kopfstücke (4) angeordnet sind.

5. Linearwälzlager nach Anspruch 4, bei dem Paare von in Längsrichtung der Führungsschiene (2) hintereinander angeordneten Längsdichtungen (23, 24, 39, 40, 45, 46) sich jeweils über die Länge eines der Lastabschnitte (7) des Umlaufkanals (6) erstrecken, wobei die eine Längsdichtung (23, 24, 39, 40, 45, 46) des Paares dem einem Längsdichtungskäfig (21) und die andere Längsrichtung des Paares dem anderen Längsdichtungskäfig (21) zugeordnet ist.

6. Linearwälzlager nach Anspruch 2, bei dem je einem der Paare von Halteleisten (16, 17, 33, 34, 43, 44) ein Paar von Längsdichtungen (23, 24, 39, 40, 45, 46) zugeordnet ist, wobei die zwischen den freien Enden der beiden Halteleisten (16, 17, 33, 34, 43, 44) gebildete Übergangsstelle (47, 48) in Längsrichtung der Führungsschiene (2) versetzt zu der zwischen den freien Enden der beiden Längsdichtungen (23, 24, 39, 40, 45, 46) gebildete Übergangstelle (47, 48) angeordnet ist.

7. Linearwälzlager nach Anspruch 3, bei dem der Längsdichtungskäfig (21) auf den Schmierstoffverteiler (15a) aufgesteckt ist.

8. Linearwälzlager nach Anspruch 3, bei dem der Bügel (22) des Längsdichtungskäfigs (21) an die Kontur der Führungsschiene (2) angepasst und als Kopfdichtung ausgebildet ist, die in Dichtkontakt mit der Führungsschiene (2) steht.

9. Linearwälzlager nach Anspruch 1, bei dem zu beiden Längsseiten der Führungsschiene (2) je zwei Umlaufkanäle (6) angeordnet sind, deren Umlaufebenen winklig zueinander angeordnet sind, wobei die beiden Lastabschnitte (7) zwischen zwei Längsdichtungen (23, 24, 39, 40, 45, 46) angeordnet sind, die die beiden Lastabschnitte (7) an ihren Längsseiten abdichten.

10. Linearwälzlager nach Anspruch 1, bei dem die Halteleiste (16, 17) mit einer Längsaufnahme (26) zur Halterung der Längsdichtung (23, 24) versehen ist.

11. Linearwälzlager nach Anspruch 1, bei dem die Halteleiste (16, 17) mit einem Längsschlitz (27) zur Durchführung einer Dichtlippe (28) der Längsdichtung (23, 24) versehen ist.

## Claims

1. Linear rolling bearing, having a guide carriage (1) which is mounted in a longitudinally movable manner on a guide rail (2) by means of rolling bodies and which with its limbs engages partially around the guide rail (2),
- wherein the rolling bodies are arranged, such that they can circulate in an endless fashion, in endless circulating channels (6) situated at both longitudinal sides of the guide rail (2), wherein the circulating channel (6) has a load portion (7), a return portion (8) and diverting portions (9) which connect the load portion (7) to the return portion (8) in an endless fashion, wherein in the load portion (7) the rolling bodies roll on raceways (7a, 7b) of the guide carriage (1) and of the guide rail (2), and wherein the rolling bodies pass from an end of the load portion (7) to a start of the load portion (7) via the diverting portions (9) and via the return portion (8),
- wherein the guide carriage (1) has a supporting body (3), which is provided with the raceways (7a) of the load portion (7) and with the return portions (8), and head pieces (4) which are arranged at both face sides of the supporting body (3) and which are provided with the diverting portions (9),
- and wherein the guide carriage (1) is provided, on its limbs, with longitudinal seals (23, 24) between the guide carriage (1) and the guide rail (2), which longitudinal seals seal off the load portions (7) of the circulating channels (6),
- and wherein the guide carriage (1) is provided, on its two face-side ends, with head seals or front scrapers (25) which seal off the guide carriage (1) on the face side, wherein the two head pieces (4) are provided with in each case one seal support which is provided with at least one, preferably two, retaining strips (16, 17, 33, 34, 43, 44) which are arranged at each of the two longitudinal sides of the guide rail (2) and which extend along the guide rail (2) between the guide carriage (1) and the guide rail (2), wherein the retaining strips (16, 17, 33, 34, 43, 44) support the longitudinal seals (23, 24, 39, 40, 45, 46), **characterized in that** the two head pieces (4) have in each case one lubricant distributor (15a, 32, 35, 36) provided with lubricant ducts (20), wherein the lubricant ducts (20) are connected to the circulating channels (6), and wherein the seal support is formed by the lubricant distributor (15a, 32, 35, 36).

2. Linear rolling bearing according to Claim 1, in which pairs of retaining strips (16, 17, 33, 34, 43, 44) arranged in series in the longitudinal direction of the guide rail (2) extend in each case over the length of one of the load portions (7) of the circulating channel (6).

3. Linear rolling bearing according to Claim 1, in which a longitudinal seal cage (21) is formed, the longitudinal seals (21) of which integrally adjoin an approximately U-shaped bracket (22), wherein the bracket (22) engages around the guide rail (2).

4. Linear rolling bearing according to Claim 3, in which two longitudinal seal cages (21) are provided which face one another with the free ends thereof and the brackets (22) of which are arranged in each case on one of the two head pieces (4).

5. Linear rolling bearing according to Claim 4, in which pairs of longitudinal seals (23, 24, 39, 40, 45, 46) arranged in series in the longitudinal direction of the guide rail (2) extend in each case over the length of one of the load portions (7) of the circulating channel (6), wherein one longitudinal seal (23, 24, 39, 40, 45, 46) of the pair is assigned to one longitudinal seal cage (21) and the other longitudinal seal of the pair is assigned to the other longitudinal seal cage (21).

6. Linear rolling bearing according to Claim 2, in which in each case one of the pairs of retaining strips (16, 17, 33, 34, 43, 44) is assigned a pair of longitudinal seals (23, 24, 39, 40, 45, 46), wherein the transition point (47, 48) formed between the free ends of the two retaining strips (16, 17, 33, 34, 43, 44) is arranged offset in the longitudinal direction of the guide rail (2) with respect to the transition point (47, 48) formed between the free ends of the two longitudinal seals (23, 24, 39, 40, 45, 46).

7. Linear rolling bearing according to Claim 3, in which the longitudinal seal cage (21) is plugged onto the lubricant distributor (15a).

8. Linear rolling bearing according to Claim 3, in which the bracket (22) of the longitudinal seal cage (21) is matched to the contour of the guide rail (2) and is formed as a head seal which is in sealing contact with the guide rail (2).

9. Linear rolling bearing according to Claim 1, in which at both longitudinal sides of the guide rail (2) there are arranged in each case two circulating channels (6) whose circulation planes are arranged at an angle with respect to one another, wherein the two load portions (7) are arranged between two longitudinal seals (23, 24, 39, 40, 45, 46) which seal off the two load portions (7) at the longitudinal sides thereof.

10. Linear rolling bearing according to Claim 1, in which the retaining strip (16, 17) is provided with a longitudinal receptacle (26) for retaining the longitudinal seal (23, 24).

11. Linear rolling bearing according to Claim 1, in which the retaining strip (16, 17) is provided with a longitudinal slot (27) for the leadthrough of a sealing lip (28) of the longitudinal seal (23, 24).

## Revendications

1. Palier à roulement linéaire, comprenant un chariot de guidage (1) monté par le biais de corps de roulement de manière déplaçable longitudinalement sur un rail de guidage (2), qui vient en prise en partie avec ses branches autour du rail de guidage (2),
- les corps de roulement étant disposés de manière à pouvoir tourner sans fin dans des canaux de circulation sans fin (6) placés des deux côtés longitudinaux du rail de guidage (2), le canal de circulation (6) présentant une portion de charge (7), une portion de retour (8) ainsi que des portions de renvoi (9) reliant sans fin la portion de charge (7) à la portion de retour (8), les corps de roulement roulant dans la portion de charge (7) sur des pistes de roulement (7a, 7b) du chariot de guidage (1) et du rail de guidage (2), et les corps de roulement parvenant, depuis une extrémité de la portion de charge (7), par le biais des portions de renvoi (9) et de la portion de retour (8), jusqu'au début de la portion de charge (7),
- le chariot de guidage (1) présentant un corps porteur (3) pourvu des pistes de roulement (7a) de la portion de charge (7) et des portions de retour (8) ainsi que des pièces de tête (4) disposées des deux côtés frontaux du corps porteur (3), qui sont pourvues des portions de renvoi (9),
- et le chariot de guidage (1) étant pourvu au niveau de ses branches de joints d'étanchéité longitudinaux (23, 24) entre le chariot de guidage (1) et le rail de guidage (2), qui scellent hermétiquement les portions de charge (7) des canaux de circulation (6),
- et le chariot de guidage (1) étant pourvu à ses deux extrémités frontales de joints d'étanchéité de tête ou de racles frontales (25), qui scellent hermétiquement le chariot de guidage (1) du côté frontal, les deux pièces de tête (4) étant pourvues d'un support de joint d'étanchéité respectif qui est pourvu d'au moins une, de préférence de deux, nervures de retenue (16, 17, 33, 34, 43, 44) disposées vers chacun des deux côtés longitudinaux du rail de guidage (2), qui s'étendent le long du rail de guidage (2) entre le chariot de guidage (1) et le rail de guidage (2), les nervures de retenue (16, 17, 33, 34, 43, 44) portant les joints d'étanchéité longitudinaux (23, 24, 39, 40, 45, 46), **caractérisé en ce que** les deux pièces de tête (4) présentent chacune un distributeur de lubrifiant (15a, 32, 35, 36) pourvu de canaux de lubrifiant (20), les canaux de lubrifiant (20) étant raccordés aux canaux de circulation (6), et le support d'étanchéité étant formé par le distributeur de lubrifiant (15a, 32, 35, 36).

2. Palier à roulement linéaire selon la revendication 1, dans lequel des paires de nervures de retenue (16, 17, 33, 34, 43, 44) disposées les unes derrière les autres dans la direction longitudinale du rail de guidage (2) s'étendent à chaque fois sur la longueur de l'une des portions de charge (7) du canal de circulation (6).

3. Palier à roulement linéaire selon la revendication 1, dans lequel une cage de joints d'étanchéité longitudinaux (21) est formée, dont les joints d'étanchéité longitudinaux (21) se raccordent d'une seule pièce à un étrier approximativement en forme de U (22), l'étrier (22) venant en prise autour du rail de guidage (2).

4. Palier à roulement linéaire selon la revendication 3, dans lequel deux cages de joints d'étanchéité longitudinaux (21) tournées avec leurs extrémités libres l'une vers l'autre sont prévues, dont les étriers (22) sont disposés à chaque fois sur l'une des deux pièces de tête (4).

5. Palier à roulement linéaire selon la revendication 4, dans lequel des paires de joints d'étanchéité longitudinaux (23, 24, 39, 40, 45, 46) disposés les uns derrière les autres dans la direction longitudinale du rail de guidage (2) s'étendent à chaque fois sur la longueur de l'une des portions de charge (7) du canal de circulation (6), l'un des joints d'étanchéité longitudinaux (23, 24, 39, 40, 45, 46) de la paire étant associé à l'une des cages de joints d'étanchéité longitudinaux (21) et l'autre joint d'étanchéité longitudinal de la paire étant associé à l'autre cage de joints d'étanchéité longitudinaux (21).

6. Palier à roulement linéaire selon la revendication 2, dans lequel une paire de joints d'étanchéité longitudinaux (23, 24, 39, 40, 45, 46) est à chaque fois associée à l'une des paires de nervure de retenue (16, 17, 33, 34, 43, 44), le point de transition (47, 48) formé entre les extrémités libres des deux nervures de retenue (16, 17, 33, 34, 43, 44) étant disposé dans la direction longitudinale du rail de guidage (2) de manière décalée par rapport au point de transition (47, 48) formé entre les extrémités libres des deux joints d'étanchéité longitudinaux (23, 24, 39, 40, 45, 46).

7. Palier à roulement linéaire selon la revendication 3, dans lequel la cage de joints d'étanchéité longitudinaux (21) est enfichée sur le distributeur de lubrifiant (15a).

8. Palier à roulement linéaire selon la revendication 3, dans lequel l'étrier (22) de la cage de joints d'étanchéité longitudinaux (21) est adapté au contour du rail de guidage (2) et est réalisée sous forme de joint d'étanchéité de tête qui est en contact d'étanchéité avec le rail de guidage (2).

9. Palier à roulement linéaire selon la revendication 1, dans lequel des deux côtés longitudinaux du rail de guidage (2) sont disposés à chaque fois deux canaux de circulation (6), dont les plans de circulation sont disposés suivant un angle l'un par rapport à l'autre, les deux portions de charge (7) étant disposées entre deux joints d'étanchéité longitudinaux (23, 24, 39, 40, 45, 46) qui scellent hermétiquement les deux portions de charge (7) au niveau de leurs côtés longitudinaux.

10. Palier à roulement linéaire selon la revendication 1, dans lequel la nervure de retenue (16, 17) est pourvue d'un logement longitudinal (26) pour retenir le joint d'étanchéité longitudinal (23, 24).

11. Palier à roulement linéaire selon la revendication 1, dans lequel la nervure de retenue (16, 17) est pourvue d'une fente longitudinale (27) pour réaliser une lèvre d'étanchéité (28) du joint d'étanchéité longitudinal (23, 24).
